Europäisches Patentamt

(19) European Patent Office

Office européen des brevets

(11) Publication number: **0 368 426**
**A1**

## (12) EUROPEAN PATENT APPLICATION

(21) Application number: **89202853.1**

(22) Date of filing: **09.11.89**

(51) Int. Cl.⁵: **G06F 15/74**

(30) Priority: **09.11.88 NL 8802754**

(43) Date of publication of application:
**16.05.90 Bulletin 90/20**

(84) Designated Contracting States:
**AT BE CH DE ES FR GB GR IT LI LU NL SE**

(71) Applicant: **ALLIED BREWERIES NEDERLAND B.V.**
**Ceresstraat 13**
**NL-4811 CA Breda(NL)**

(72) Inventor: **Vermunt, A.W.R.**
**Karoenring 216**
**4876 XV Etten-Leur(NL)**
Inventor: **Overeem, Antonius**
**Liniewal 7**
**4841 DV Prinsenbeek(NL)**

(74) Representative: **Smulders, Theodorus A.H.J., Ir. et al**
**Vereenigde Octrooibureaux Nieuwe Parklaan 107**
**NL-2587 BP 's-Gravenhage(NL)**

(54) Monitoring system.

(57) A system for centrally monitoring the quality and quantity of a stock of beer present at at least one station in at least one beer tank. The system comprises:
- a data collecting unit provided at each station for collecting specific parameters of the beer stock in each tank;
- a central data processing unit
- a communication path for transmitting data collected by said data collecting unit to said data processing unit.

FIG.3

## A monitoring system

This invention relates to a system for centrally monitoring the quality and quantity of a stock of beer present at at least one station in at least one beer tank.

Conventionally, the stock of beer for catering establishments is supplied by the supplier in kogs of 50 or 100 litres. However, for large consumers the tank system is being increasingly used: a large tank (e.g. 1,000 litres) is present at the customer's, which can be replenished by means of a tanker lorry. Mostly the beer in the tank is contained in a flexible synthetic plastics bag. To ensure that no beer is contained in the tank for longer than a given period (e.g. 6 weeks), the bag is changed after that period. As the bag can be filled in a simpler and more economic way than be changed and filled, it is preferred to fill the bag if the bag is already empty e.g. after 1 week. In such case, there is a need for a monitoring system with which, among other things, the contents and the temperature of the tank can be monitored centrally. Such a system has the following advantages:

Disturbances or irregularities on the tank installation are known in an early stage, thus enabling an adequate intervention and thereby better ensuring the quality of the product. Moreover, orders can be carried out even without the intervention of the customer and a route planning is possible, as a result of which supply can take place more effectively and inexpensively.

All this offers advantages for the supplier (brewery) and for the customer, but also for the consumer, with the possibility for the brewery to acquire an insight into the consumption pattern.

For a reliable functioning of such a monitoring system, it is necessary that beer stock data are transmitted fully automatically to a central data processing unit arranged e.g. at the brewery, independently of any intervention from the tank manager. The transmission of these data may be effected under the control of said central data processing unit.

It is an object of the present invention to provide a system for centrally monitoring the quality and quantity of a stock of beer present at supply stations.

A further object of the present invention is to provide a system enabling an intervention in an early stage when at least one of a number of parameters to be monitored no longer meets criteria to be imposed previously.

Still another object of the present invention is to provide a system enabling to carry out orders, route planning and even invoicing in an effective and inexpensive manner, possibly even without intervention of the tank manager.

To that end, the present invention provides a system comprising:
- a data collecting unit provided at each station for collecting specific parameters of the beer stock in each tank;
- a central data processing unit;
- a communication path for transmitting data collected by said data collecting unit to said data processing unit.

In a preferred embodiment, the data processing unit is placed centrally in the brewery and all beer tank installations are provided with a data collecting unit. From the viewpoint of economy, the telephone network can be used for the communication path, and use can be made advantageously of the possibility of night tariff communication.

For monitoring the quality of the beer, it is desirable to monitor the temperature of the beer stock. The data collecting unit, consequently, is preferably provided with a temperature measuring means having an accuracy better than $1°C$ in the temperature range of $0-6°C$ which is so important for beer.

For monitoring the quantity of the beer stock, the data collecting unit is preferably fitted with a volume measuring means including e.g. an ultrasound transducer measuring the distance between the beer surface and a reference point, e.g. the upper wall of the tank.

According to the present invention, continuous contact between the data processing unit and a data collecting unit is not necessary, but a regular contact, e.g. once a day, is sufficient. When use is made of the telephone network as communication line, the monitoring system according to the present invention is preferably constructed in such a manner that a data collecting unit "calls" the data processing unit.

In the situation that the data processing unit should call in the data collecting unit, there would be the risk that the manager of the tank installation picks up the telephone in response to the call signal. This risk is eliminated by the above feature according to the present invention, without the necessity of using a special telephone connection for the data collecting unit.

Since always a certain time will elapse between the moment of communication between the data collecting unit and the data processing unit, and the moment that a supply takes place, there is usually less stock in the tank at the moment of supply than at the moment of communication. In a further preferred embodiment of the present invention, there is therefore provided a mobile data processing and controlling unit arranged to be coupled with the data collecting unit for controlling the quantity of beer to be actually delivered in response to instantaneous stock data received from the data collecting unit. This arrangement enables a highly flexible and adequate supply. Such a unit may e.g. be a so-called hand terminal.

One preferred embodiment of the monitoring system according to the present invention, elucidating these and other aspects of the invention, will now be described, by way of example, with reference to the accompanying drawings, in which:

Fig. 1 is a schematic block diagram of the monitoring system according to the present invention;

Fig. 2 is a schematic block diagram of a data collecting unit according to the present invention; and

Fig. 3 is a schematic block diagram of a preferred embodiment of the monitoring system according to the invention.

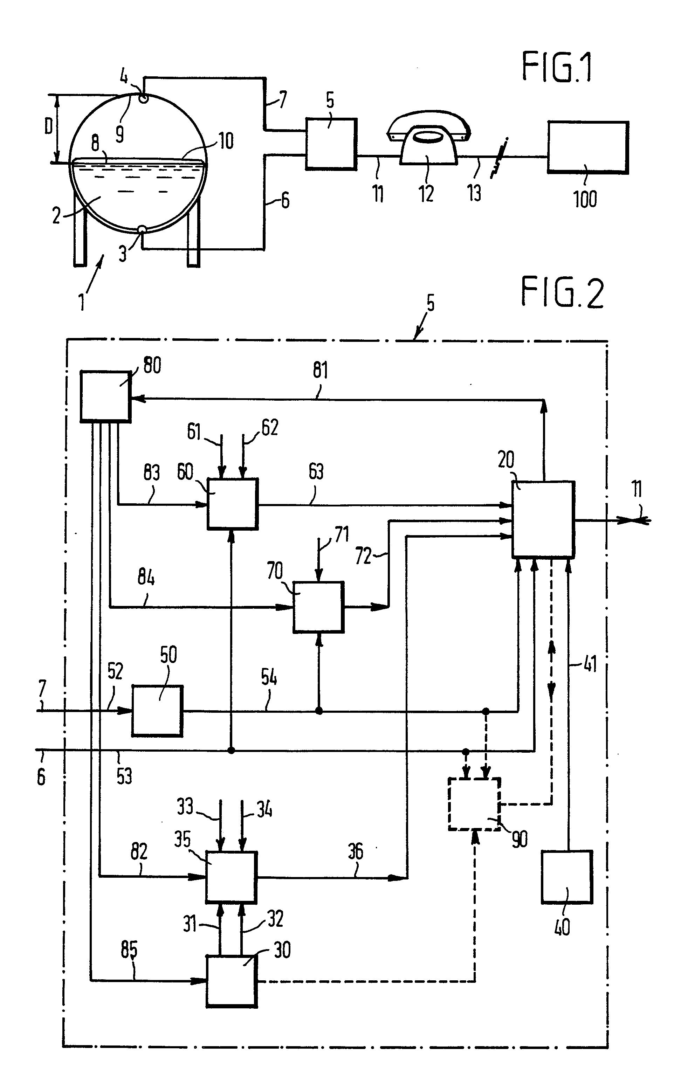

In Fig. 1, reference numeral 1 designates a tank containing a stock of beer 2, said tank having a temperature measuring means 3 and a volume measuring means 4. The beer 2 is contained in a flexible synthetic plastics bag 10 whose shape conforms to the shape of the beer stock 2 in tank 1. The temperature measuring means 3 serves to provide an electrical temperature signal representative of the temperature of the beer stock to the data collecting unit 5, and to that effect is connected to the unit 5 through a signal conductor 6. The data collecting unit 5 is connected through a signal conductor 11 to a telephone connection 12, which enables it to be connected, in the conventional manner, via a communication connection 13, forming part of the telephone network, to a central data processing unit 100.

The volume measuring means 4 serves to provide to the data collecting unit 5 an electrical signal that relates to the size of the volume of the quantity of beer 2 contained in tank 1, and to that effect is connected to the data collecting unit 5 through a signal conductor 7. Volume measuring means 4, including e.g. an ultrasound transducer, measures the position of the liquid surface 8 in tank 1, by measuring the distance D between the liquid surface 8 and a reference point 9, making allowance for relevant properties of the fluid contained in the tank, such as the velocity of sound in such fluid. From an electrical signal representing distance D, there is derived a signal representative of the size of the volume of the amount of beer 2 contained in tank 1; in this conversion the shape of the tank 1 is taken into account. This conversion takes place at the data collecting unit 5, but can also be performed, if desired, at the volume measuring means 4 or at the data processing unit 100. For monitoring purposes or for signalling that tank 1 has to be replenished, it is sufficient to detect when the distance D exceeds a given upper limit, corresponding with the volume's falling below a given lower limit, and it is not necessary to derive a volume-representing electrical signal.

The data collecting unit 5 can be operative in a number of operating modes, operating mode referring to the event which may cause the data collecting unit 5 to seek contact, if desired, with the central data processing unit 100. These events may be the following:

I. the temperature of the beer stock contained in the tank exceeds a presettable maximum value;

II. the temperature of the beer stock contained in the tank falls below a presettable minimum value;

III. the volume of the beer stock contained in the tank falls below a presettable minimum value;

IV. the amount of beer contained in the tank increases (the tank is being filled);

V. a presettable time to report is reached;

VI. a presettable time interval has lapsed since a previous report.

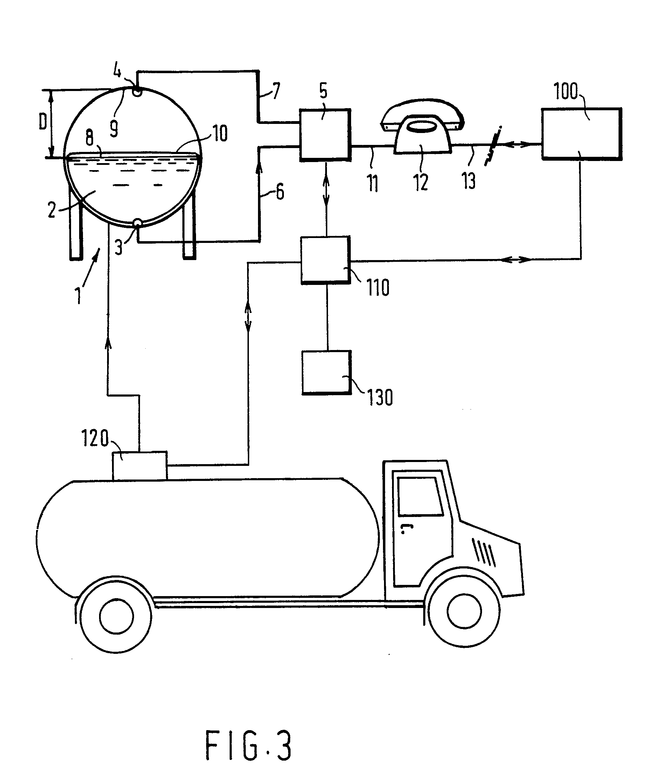

In response to the detection of one or more of the above events I-VI, in which connection, in general, the operating modes V and VI are not set simultaneously, the data collecting unit 5 will seek contact with the central data processing unit 100. Data collecting unit 5 is provided to that effect, as shown in Fig. 2, with known per se connection-seeking means 20 preferably arranged in such a manner that, in the event of failure, they do not busy the connection 12.

Known per se clock means 30 generate an electrical signal 31 representative of the time of the day and/or an electrical signal 32 representative of a time interval lapsed since the previous report. A time-comparing means 35 compares the time signals 31 and 32 respectively with a presettable time reference signal 33 and a presettable time interval reference signal 34. When the operating mode V or VI has been set, then, in response to the detection of equality between signals 31 and 32, on the one hand, and 33 and 34, on the other, the time-comparing means 35 will transmit a connection-seeking command signal 36 to the connection-seeking means 20 which, in response to the detection of signal 36, will seek connection with the central-data processing unit 100. When the connection with the central data processing unit 100 cannot be realized, e.g. because the central data processing unit 100 is "busy", the connection-seeking means 20, after lapse of a given waiting time, will again seek connection with the central data processing unit 100. The waiting time has an accidental value within a predetermined time interval but may also have a presettable constant value.

When the connection with the central data processing unit 100 has been established, data collecting unit 5 transmits an identification code signal 41 generated by identification code signal generating means 40 to the central data processing unit 100. Thereafter, an electrical temperature signal 53 generated by the temperature measuring means 3, and an electrical signal 54 representative of the volume, and derived by a converting means 50 from an electrical distance signal 52 generated by the volume measuring means 4 are transmitted through signal conductor 11 and communication connection 13 to the central data processing unit 100.

The signals 53 and 54 are passed to a temperature comparing means 60, and a volume comparing means 70, respectively. The temperature comparing means 60 compares temperature signal 53 with a presettable temperature upper limit signal 61 and with a presettable temperature lower limit signal 62. When the operating mode I is switched-in, then, in response to the detection of a temperature signal 53, which is larger than the temperature upper limit signal 61, temperature comparing means 60 will transmit a connection-seeking command signal 63 to the connection-seeking means 20. When the operating mode II is switched-in, then, in response to the detection of a temperature signal 53 which is smaller than the temperature lower limit signal 62, the temperature comparing means 60 will transmit the connection-seeking command signal 63 to the connection-seeking means 20. The volume comparing means 70 compares the volume signal 54 with a presettable volume lower limit signal 71. When the operating mode III is switched-in, then, in response to the detection of a volume signal 54 which is smaller than the volume lower limit signal 71, the volume comparing means 70 will transmit a connection-seeking command signal 72 to the connection-seeking means 20. When the operating mode IV is switched-in, then, in response to the detection of the increase in volume signal 54, the volume comparing means 70 will transmit the connection-seeking command signal 72 to the connection-seeking means 20. It will be clear that more operating modes can be switched-in simultaneously.

The data collecting unit 5 according to the present invention is further provided with control command receiving means 80. In response to the reception of control command signals 81 transmitted by the central data processing unit 100, and depending upon the nature of these signals, the control command receiving means 80 transmit command signals 82, 83, 84, 85 to the time comparing means 35, and the temperature comparing means 60, and the volume comparing means 70, and/or the clock means 30, respectively, in order to switch in or off, upon command of the central data processing unit 100, one or more operating modes I-VI, and/or to synchronize clock means 30.

In a preferred embodiment of the data collecting unit, shown in dotted lines in Fig. 2, there are provided memory means 90. When operating modes V or VI have been switched in, one or more random measurements are carried out by means of temperature measuring means 3 and volume measuring means 4, and the electrical signals 53, 54 representative of each random measurement are stored in memory means 90 in order to be read and transmitted when a connection with the central data processing unit 100 has been established.

According to the present invention, in response to the reception of the data transmitted by the data collecting unit 5, and controlled by the central data processing unit 100, the following actions can be undertaken.

In response to the detection of measuring signals deviating from a set standard, a technical inspection and/or repair is performed. It may concern failures not yet detected by the tank manager, so that the intervention takes place in a more adequate manner. An example of such a failure is a temporary excess of the permissible maximum temperature of the beer stock. Even if the manager has failed to notice this, it may be necessary to replace the beer stock.

The central data processing unit 100 can transmit a command signal, thereby effecting the supply of the tank in question; this will be done e.g. when the amount of beer is less than a given minimum value.

A tanker lorry used for provisioning generally has a capacity larger than that of a tank 1 and will therefore be capable of supplying more tanks. According to the present invention, the route planning for such a supply vehicle can be effected by the central data processing unit 100, so that delivery can take place in a more effective and inexpensive manner.

Also the financial administration of deliveries and invoicing can possibly be carried out by means of the central data processing unit, so that this too, is done more effectively and inexpensively, while it is possible to invoice the amount actually delivered.

Furthermore, the data received by central data processing unit 100, as well as other data such as date, times and the like, can be stored in a memory by the central data processing unit for subsequent (re)use, for instance making up a term survey and establishing sales patterns per day, per week etc.

As shown in Fig. 3, according to the present invention, a mobile data processing and controlling unit 110 associated with the supplying tanker lorry can be coupled with the data collecting unit 5. The mobile data processing and controlling unit 110 controls the supply in response to instantaneous stock data obtained from the data collecting unit 5, and taking into account the beer stock still contained in the tanker lorry in relation to the requirement registered with subsequent customers of the tanker lorry, by controlling the beer pump 120 of the tanker lorry. The mobile data processing and controlling unit 110 registers the distribution data at each customer of the tanker lorry and, after the supply run, is coupled to the central processing unit 100, whereby data with respect to the actually delivered amount of beer, together with other distribution data, are transmitted to the central data processing unit 100. As a result, it is also possible to check the measuring means of the data collecting units. For the benefit of each individual customer, the mobile data processing and controlling unit 110 is further provided with means 130 for printing the distribution data, such as the amount of beer supplied.

In a further preferred embodiment of the monitoring system according to the present invention, the tanker lorry is also provided with temperature measuring means and volume measuring means, and the measurement data are registered in a memory during the supply run, which memory is subsequently read by the central data processing unit. This arrangement enables the quality and quantity to be monitored still further, as well as the measuring means to be checked with respect to each other.

It will be clear that it is possible to modify the embodiment discussed or to adapt it, without departing from the scope of the present invention.

For instance, it is possible for the means 35, 60 and 70 to generate connection-seeking command signals independently of the operating mode set and for the character of the operating mode set to be expressed by the response or non-response to said signals by the connection-seeking means 20. The data transmission from/to the central data processing unit 100, as shown, need not take place via the connection-seeking means 20 either. The data collecting unit 5 may further be arranged in such a manner that, after the supply voltage has dropped out and restored, connection is sought with the data processing unit for synchronizing the clock means.

It is likewise possible for the data collecting unit 5 to be provided with output means and/or alarm means for the benefit of the tank manager. The manager is then in a position to check the instantaneous situation in each tank, while it is also possible to signal, by means of the read-out means, what actions have been undertaken by the data collecting unit 5, and it is then likewise possible to represent a possible message from the brewery to the manager.

It will also be clear that, although the embodiment of the invention discussed is based on one beer tank per customer, the present invention can also be applied when more beer tanks are present at one address. It will then be clear to one skilled in the art that one data collecting unit per address will suffice, with each beer tank being provided with a volume measuring means and a temperature measuring means.

## Claims

1. A system for centrally monitoring the quality and quantity of a stock of beer present at at least one station in at least one beer tank, characterized by
- a data collecting unit provided at each station for collecting specific parameters of the beer stock in each tank;
- a central data processing unit
- a communication path for transmitting data collected by said data collecting unit to said data processing unit.

2. A system as claimed in claim 1, in which said communication path comprises a telephone network, characterized in that said data collecting unit comprises means for seeking connection with the central data processing unit via said telephone network.

3. A system as claimed in claim 2, characterized by means for generating an identification code representative of the respective data collecting unit when the connection with the data processing unit has been established.

4. A system as claimed in any of claims 1-3, characterized in that the data collecting unit includes clock means.

5. A system as claimed in any of claims 1-4, characterized in that each tank is provided with a temperature measuring means for measuring the temperature of the quantity of beer present in such tank and for generating an electrical temperature signal representative of such temperature.

6. A system as claimed in claim 5, characterized in that, in the temperature range of 0-6°C, the temperature measuring means have an accuracy better than 1°C.

7. A system as claimed in any of claims 1-6, characterized in that each tank is provided with a volume measuring means for generating an electrical signal relating to the size of the volume of the amount of beer present in the tank.

8. A system as claimed in claim 7, characterized in that the volume measuring means comprise means for measuring the distance between the surface of the beer and a reference point substantially perpendicularly to the surface of the beer stock; and that an electrical volume signal is generated in dependence upon the cross-sectional configuration of the tank.

9. A system as claimed in claim 8, characterized in that the distance measuring means comprise an ultrasound transducer.

10. A system as claimed in any one of claims 5-9, characterized in
- that said data processing unit includes memory means;
- that said electrical temperature signals and/or electrical volume signals are stored in said memory means before these data are transmitted to the data processing unit.

11. A system as claimed in any of the preceding claims, characterized by a mobile data processing and controlling unit associated with a supplying tanker lorry and arranged to be coupled with said data collecting unit for controlling the quantity of beer to be actually delivered in response to instantaneous stock data obtained from said data collecting unit.

12. A system as claimed in claim 11, characterized in that said mobile data processing and controlling unit controls the quantity of beer to be actually delivered in dependence upon the beer supply still contained in said tanker and upon the registered requirement of the present and the subsequent consumers of the tanker lorry.

13. A system as claimed in claim 11 or 12, characterized in that said mobile data processing and controlling unit includes means for printing the distribution data for an individual consumer.

14. A system as claimed in any of claims 11-13, characterized in that said mobile data processing and controlling unit includes means for storing the distribution data at each consumer of the tanker lorry for the purpose of transmitting such data to said central data processing unit.

15. A beer tank, characterized by the provision, within said tank, of a temperature measuring means and a volume measuring means evidently designed for use in a system as claimed in any of the preceding claims for centrally monitoring a stock of beer contained in said beer tank.

EP 0 368 426 A1

FIG.1

FIG.2

FIG·3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 605 170 (LETAILLEUR)<br>* Page 5, lines 2-39; page 8, line 22 - page 9, line 10; page 10, lines 12-22; figures 1,4 *<br>--- | | G 06 F 15/74 |
| A | WO-A-8 500 455 (LISZKA)<br>* Page 2, line 8 - page 4, line 6; figure 1 *<br>--- | | |
| A | GB-A-2 050 521 (VAN DER LELY)<br>* Page 1, lines 8-20; page 2, line 67 - page 3, line 69; figures 6-8 *<br>--- | | |
| A | FR-A-2 541 663 (SCHULTZ)<br>* Page 2, line 18 - page 3, line 2; figure 1 *<br>----- | | |

TECHNICAL FIELDS
SEARCHED (Int. Cl.5)

G 06 F 15/74
B 60 P 3/22
B 67 D 1/12

The present search report has been drawn up for all claims

| Place of search | Date of completion of the search | Examiner |
|---|---|---|
| THE HAGUE | 02-02-1990 | CHUGG D.J. |

EPO FORM 1503 03.82 (P0401)